(19) **Europäisches Patentamt**

**European Patent Office**

**Office européen des brevets**

(11) **EP 1 533 544 A2**

(12) **EUROPEAN PATENT APPLICATION**

(43) Date of publication:
**25.05.2005 Bulletin 2005/21**

(51) Int Cl.⁷: **F16H 57/00**, B25J 9/16,
B25J 9/10

(21) Application number: **04027408.6**

(22) Date of filing: **18.11.2004**

| | |
|---|---|
| (84) Designated Contracting States:<br>**AT BE BG CH CY CZ DE DK EE ES FI FR GB GR HU IE IS IT LI LU MC NL PL PT RO SE SI SK TR**<br>Designated Extension States:<br>**AL HR LT LV MK YU** | • **Kato, Tetsuaki**<br>**Hadano-shi Kanagawa 259-1326 (JP)**<br>• **Okada, Takeshi Room 10-306**<br>**Oshino-mu Minamitsuru**<br>**Yamanashi 401-0511 (JP)** |
| (30) Priority: **21.11.2003 JP 2003392194** | (74) Representative: **Schmidt, Steffen J., Dipl.-Ing.**<br>**Wuesthoff & Wuesthoff,** |
| (71) Applicant: **FANUC LTD**<br>**Minamitsuru-gun, Yamanashi 401-0597 (JP)** | **Patent- und Rechtsanwälte,**<br>**Schweigerstrasse 2**<br>**81541 München (DE)** |
| (72) Inventors:<br>• **Nihei, Ryo**<br>**Fujiyoshida-shi Yamanashi 403-0005 (JP)** | |

(54) **Articulation system for robot comprising a speed reducer provided with vibration cancelling means**

(57)     In an articulation system for a robot according to the present invention, an eccentric rocking type planetary gear speed reducing mechanism is used, but a two-stage speed reducing structure is not employed. Output of an acceleration sensor (11) attached to an output shaft (7) of a speed reducer (10) is passed through a band pass filter (12) to obtain a vibration component. Based on the obtained vibration component and the rotational phase of the motor detected by a pulse coder (13), a vibration suppression correction torque corresponding to the rotational phase of the motor is determined. The vibration suppression correction torque is added to the torque command Tc to correct the torque command and causes the motor (1) to operate in accordance with the corrected torque command. The vibration suppression correction torque is determined by learning processing and is updated until the vibration component is sufficiently reduced. when the vibration component has been sufficiently reduced, this updating operation is stopped, the vibration suppression correction torque is fixed. Further, the torque command is corrected, and operation of the motor (1) is controlled in accordance with the corrected torque command.

EP 1 533 544 A2

**Description**

BACKGROUND OF THE INVENTION

1. Field of the Invention

The present invention relates to an articulation system for an industrial robot.

2. Description of the Related Art

The articulations of robots use many RV speed reducers, cyclo speed reducers, and other speed reducers employing eccentric rocking type planetary gear speed reducing mechanisms. In speed reducers of this structure, there is the problem that vibration occurs due to eccentric motion and therefore vibration accompanies operation of the robot. To deal with this problem, in the past, the method has generally been used of providing a gear speed reducer at the upstream side and remove the range where a resonance phenomenon occurs from the ordinary control region of the motor. For example, as an example of such a speed reducer, Japanese Examined Patent Publication (Kokoku) No. 8-22516 discloses a speed reducer including an upstream-side speed reducer and a downstream-side speed reducer. The upstream-side speed reducer is composed of a parallel axis type gear device, and the downstream-side speed reducer is comprised of an internal gear fixed to a case etc., external gears meshing with the internal gear, and a crankshaft serving as a cam shaft for engaging with the external gears and rocking and rotating the external gears. Further, by determining the reduction ratio of the upstream-side speed reducer so that vibration does not occur due to the eccentric rocking motion of the dawnstream-side speed reducer, the occurrence of vibration is prevented.
A speed reducer used for robot articulation comprised of an eccentric rocking type planetary gear speed reducing mechanism, as explained above, is a two-stage speed reducing structure comprised of an upstream-side speed reducer and a downstream-side speed reducer. This results in a complex structure of the speed reducer and an increased cost.

SUMMARY OF THE INVENTION

Therefore, an object of the present invention is to provide an articulation system for a robot suppressing the occurrence of vibration while using an eccentric rocking type planetary gear speed reducing mechanism without adopting a two-stage speed reducing structure.
To attain the above object, there is provided an articulation system for a robot, which includes two members connected with each other through a speed reducer to be able to be rotated relative to each other; a motor for rotationally driving the two members with respect to each other; and a controller for controlling the motor; the speed reducer including a case, an input shaft connected to a drive shaft of the motor, external gears engaged with the input shaft and able to be eccentrically rocked, an internal gear provided at the inside of the case and meshing with the external gears, an output shaft supported rotatably with respect to the case, and a plurality of pin members engaging with the external gears and transmitting rotating motion of the external gears to the output shaft, wherein the controller includes a means for obtaining and storing correlation between a vibration component occurring from the speed reducer and motor rotational position, and a means for controlling the motor so as to cancel out the vibration component based on the stored correlation in order to suppress the occurrence of vibration. Further, the controller, instead of obtaining correlation between a vibration component occurring from the speed reducer and motor rotational position, may obtain correlation between a vibration component occurring from the speed reducer and rotational position of the output shaft of the speed reducer.
Due to this configuration, it is possible to suppress vibration occurring due to the eccentric rocking without providing an upstream-side speed reducer in the eccentric rocking type planetary gear speed reducer used for articulation of the robot and possible to obtain an articulation system for a robot which is structured simply and inexpensively.
The above correlation may be obtained by learning processing.
The drive shaft of the motor and the input shaft of the speed reducer may also be directly connected with each other, or may be connected with each other through an unbalance coupling, instead of being directly connected, so that a vibration component of the unbalance coupling is used to cancel out the vibration component of the speed reducer. Alternatively, it is also possible to add an unbalance weight to an end of the input shaft of the speed reducer at an opposite side to the motor, so that a vibration component of the unbalance coupling is used to cancel the vibration component of the speed reducer.

BRIEF DESCRIPTION OF THE DRAWINGS

The above and other objects, features and advantages of the present invention will described in more detail below based on the preferred embodiments of the present invention with reference to the accompanying drawings, wherein:

FIG. 1 is a perspective view of a robot using an articulation system according to the present invention;
FIG. 2 is a cross-sectional view of a speed reducer in an articulation system according to a first embodiment of the present invention;
FIG. 3 is a block diagram of a motor controller in the articulation system according to the first embodiment;
FIG. 4 is a flow chart of learning processing for obtaining a vibration suppression correction torque in the articulation system according to the first embodiment;
FIG. 5 is a flow chart of motor control accompanying vibration suppression processing in the articulation system of according to the first embodiment;
FIG. 6 is a cross-sectional view of a speed reducer in an articulation system according to a second embodiment of the present invention; and
FIG. 7 is a cross-sectional view of a speed reducer in an articulation system according to a third embodiment of the present invention.

DESCRIPTION OF THE PREFERRED EMBODIMENTS

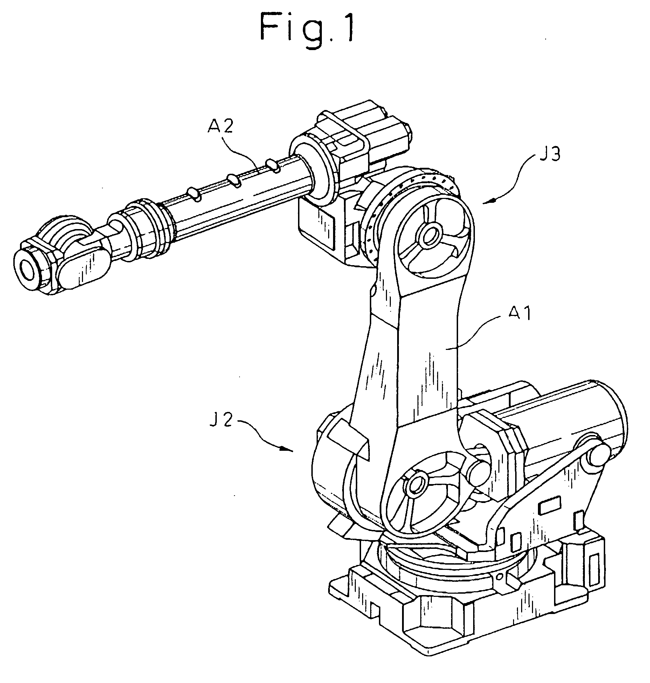

FIG. 1 is a perspective view of a robot using an articulation system according to the present invention. The articulation system according to the present invention is used at articulation axes J2 and J3 for making a bottom arm A1 and top arm A2 rock and has a structure of a motor and speed reducer directly connected to each other. It greatly reduces the speed of the rotational output of the motor and suppresses occurrence of vibration.

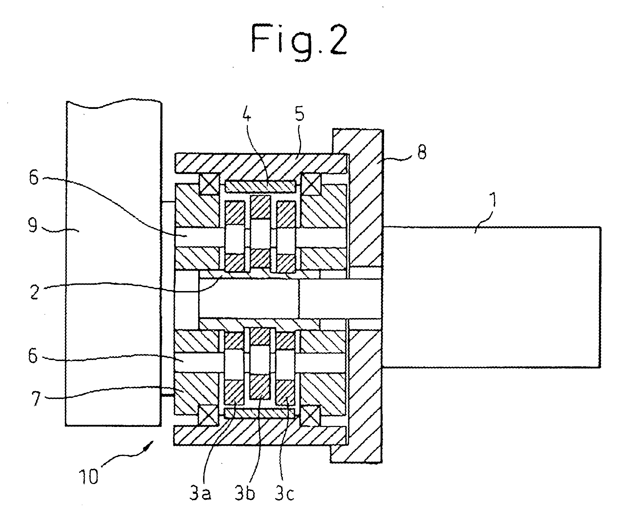

FIG. 2 is a cross-sectional view of a speed reducer 10 in an articulation system according to a first embodiment of the present invention. A drive shaft of a servo motor 1 attached to a first member 8 is directly connected to an input shaft 2 of a speed reducer 10. The input shaft 2 includes a crankshaft part forming a cam. Three external gears 3a, 3b, and 3c are engaged with the cam faces of the crankshaft part. Further, external gears 3a, 3b, and 3c mesh with an internal gear 4 provided at the inside of a case 5 of the speed reducer 10 attached to the first member 8. The external gears 3a, 3b, and 3c have a plurality of pin members 6 engaged with them. The pin members 6 are connected to an output shaft 7. The output shaft 7 is coaxial with the input shaft 2, is supported rotatably by the case 5 of the speed reducer 10, and is attached to a second member 9. For example, when using the articulation system shown in FIG. 2 for the articulation axis J2, one of the turning trunk part and bottom arm A1 of the robot connected by the articulation system corresponds to the first member 8 and the other the second member 9. When used for the articulation axis J3, one of the bottom arm A1 and the top arm A2 corresponds to the first member 8 and the other the second member 9.

When the servo motor 1 is actuated to rotate the drive shaft and input shaft 2 of the speed reducer 10, the external gears 3a, 3b, and 3c engaged with the crankshaft part of the input shaft 2 eccentrically rock and orbit and rotate while meshing with the internal gear 4 provided at the inside of the case 5 of the speed reducer 10.

When the number of teeth of the external gears 3a, 3b, and 3c is $n_1$ and the number of teeth of the internal gear 4 is $n_2$, the external gears 3a, 3b, and 3c rotate by $(n_2-n_1)/n_2$ while the external gears make one orbit. This rotation is taken out from the plurality of pin members 6 engaged with the external gears 3a, 3b, and 3c, reaches the output shaft 7 of the speed reducer, and makes the second member 9 attached to the output shaft 7 turn relatively to the first member 8.

As described above, the robot articulation system in this embodiment is designed to drive the input shaft 2 of the eccentric rocking type planetary gear speed reducing mechanism directly by the motor 1. Therefore, as described above, vibration is liable to occur due to the eccentric rocking. Accordingly, the present invention controls the drive of the rotation of the servo motor 1 so as to suppress this vibration.

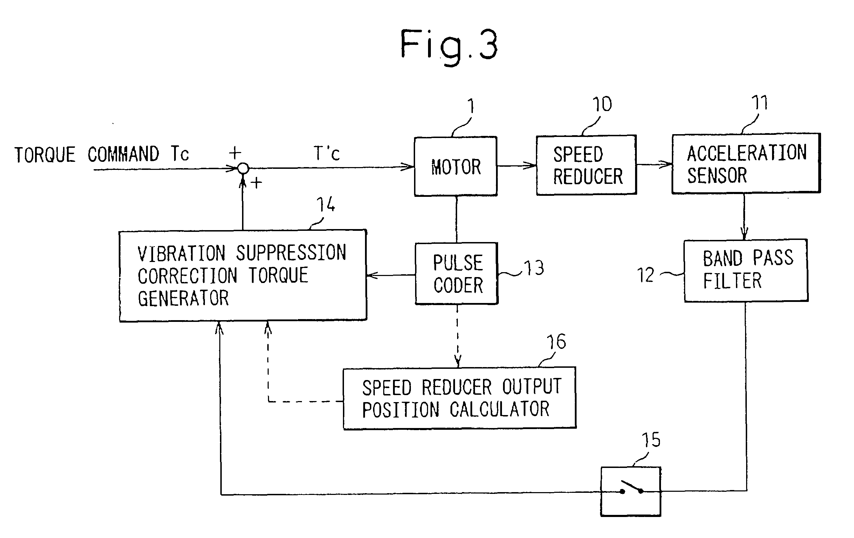

FIG. 3 is a block diagram of a controller of a servo motor 1 for driving the articulation system of this embodiment used as the articulation of the robot.

The position and speed loop control processings applied to the servo motor 1 are similar to the conventional ones. In FIG. 3, illustration is omitted. The servo motor 1 operates in accordance with a torque command T'c corrected by adding to the torque command Tc determined by this position control and speed control a correction torque generated by the later described vibration suppression correction torque generator 14. The output of the servo motor 1 is reduced in speed by the speed reducer 10 and drives the robot moving parts (bottom and top arms).

The output side of the speed reducer 10 has an acceleration sensor 11 attached to it to detect the acceleration of the speed reducer output side. A band pass filter 12 strips, from the information detected by this acceleration sensor 11, the acceleration of the low frequency speed reducer output side generated due to normal operation and the high frequency noise component, to take cut only the vibration component. When executing the learning processing for preparing data of the vibration suppression correction torque, the output from the band pass filter 12 is input to a vibration suppression correction torque generator 14 through an on switch 15. Further, a pulse coder 13 attached to the servo motor 1 detects the rotational position of the motor and inputs the detected rotational position of the motor 1 to the vibration suppression correction torque generator 14. The vibration suppression correction torque generator 14 determines and obtains the correlation between the vibration component and the rotational position (rotational phase) of the motor 1, based on the rotational position (rotational phase) of the motor 1 and the vibration component input from the band pass filter 12. That is, the vibration suppression correction torque corresponding to the rotational position of the motor 1 is determined from this learning processing. Note that after the vibration suppression correction torque for the rotational position of the motor 1 is determined by the learning processing, the switch 15 is opened and the determined vibration suppression correction torque is added to the torque command Tc to obtain the corrected torque command T'c.

While not shown in FIG. 3, there are springs, damper elements, and other parts in the interval from the servo motor 1 to the front ends of the moving parts (top arm A2 and bottom arm A1). When a time lag occurs until the torque is transmitted to the speed reducer output side, it is possible to add a means for compensating for the lag after the vibration suppression correction torque generator 14 so that it compensates for the lag at the vibration suppression correction torque and the compensated vibration suppression correction torque is added as the correction torque to the torque command, thereby improving the effect of suppression of vibration.

When using the rotational phase of the output shaft 7 of the speed reducer 10 (position advanced in one rotation period) instead of the rotational position of the motor 1, as shown by the broken line in FIG. 3, the rotational position of the output side of the speed reducer 10 is determined based on the motor rotational position detected by the pulse coder 13 and is output to the vibration suppression correction torque generator 14. That is, a speed reducer output position calculator 16 cumulatively adds the output pulses from the pulse coder 13. When the cumulative value reaches a value corresponding to one rotation of the speed reducer output side, it performs processing for clearing this cumulative value and divides the cumulative value by the reduction ratio of the speed reducer 10 to obtain the rotational position of the output shaft 7 of the speed reducer 10, outputs this to the vibration suppression correction torque generator 14, and determines the vibration suppression correction torque corresponding to the rotational position of the speed reducer output side.

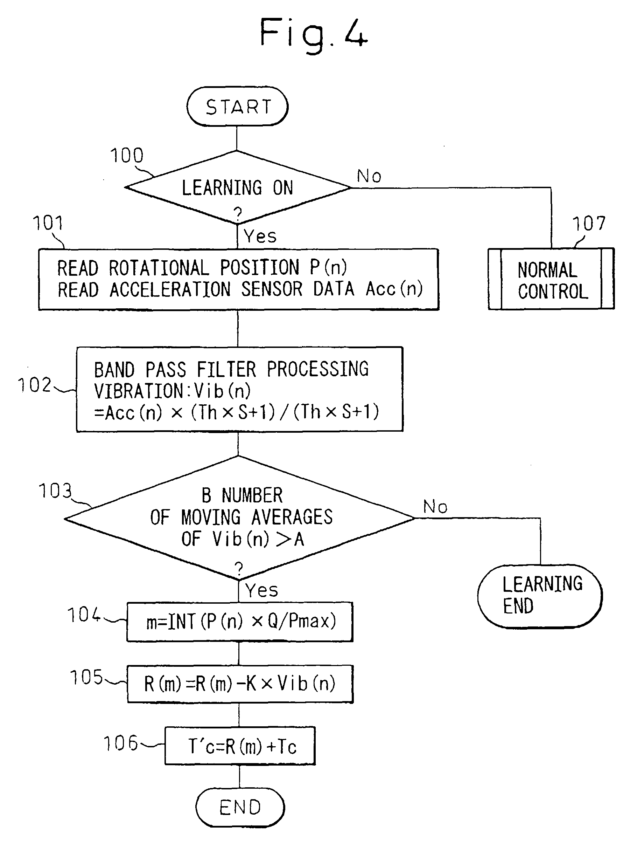

FIG. 4 is a flow chart of processing which the processor of the controller for controlling the operation of the servo motor 1 executes at each predetermined period when determining a vibration suppression correction torque by the above learning processing.

First, whether or not to perform the learning processing is set in advance by a parameter etc. It is judged based on this set parameter whether or not to perform the learning processing (step 100). When not performing this learning processing, the routine proceeds to step 107 where motor control is performed accompanied with the later described normal vibration suppression control. On the other hand, when performing this learning processing, first the rotational position P(n) of the motor 1 detected by the pulse coder 13 and the output Acc(n) of the acceleration sensor 11 are read (step 101). Next, the generally used digital filtering is performed to strip from the output Acc(n) of the acceleration sensor 11 the low frequency component and the high frequency component so as to extract the vibration component Vib(n). That is, the processing represent by the next equation (1) is performed to extract the vibration component Vib(n):

$$Vib(n) = Acc(n) \times (Th \times S + 1) / (Tl \times S + 1) \qquad (1)$$

where, Th and Tl are time constants and S is a Laplace operator.

Next, it is judged whether or not a predetermined B number of moving averages of the vibration component Vib(n) obtained are larger than a predetermined value A (step 103). When larger than the predetermined value A, the routine proceeds to step 104.

In this embodiment, one rotation of the pulse coder 13 (one rotation of the motor) is divided into Q sections (for example, Q=4000) and provision is made of registers R(1) to R(Q) (=R(4000)) for storing vibration suppression correction torques corresponding to these divided regions. When the resolution of one rotation of the pulse coder is Pmax and the region in a divided region corresponding to the rotational position of the motor 1 detected at step 101 is m, this region m is found by computation of the following equation (2):

$$m = Int(P(n) \times Q/Pmax) = Int(P(n) \times 4000/Pmax) \qquad (2)$$

where, Int is a function for conversion to an integral.

By discarding the fractions of or rounding off the value obtained by computation of P(n)xQ/Pmax (=P(n) x4000/Pmax) in accordance with the above equation (2), the obtained value is made a whole integer to find the region m (step 104). The value of the register R(m), that is, the vibration suppression correction torque at the found region m, is updated to the value of the register R(m) storing the vibration suppression correction torque of the found region m minus the value obtaining by multiplying the vibration component Vib(n) obtained at step 102 by the coefficient K (step 105). Note that the coefficient K is the value determined, by considering the degree of the effect on the vibration suppression correction torque by a single learning processing in addition to the coefficient of conversion from the vibration acceleration to the torque.

Next, the value stored in the register R(m) is added to the torque command Tc determined by the normal position and speed loop control processing so as to obtain the torque command T'c corrected by the vibration suppression correction torque. The servo motor 1 is then operated in accordance with the obtained torque command T'c (step 106).

Below, when steps 100 to 106 are executed every processing period and the moving average value of the vibration component Vib(n) falls below the predetermined value A and the vibration becomes sufficiently small at step 103, the learning processing is ended and the vibration suppression correction torques at the regions stored in the registers R(1) to R(Q) (=R(4000)) are used as the vibration suppression correction torque in the subsequent motor control. This learning processing ends when the learning processing is invalidated at step 100.

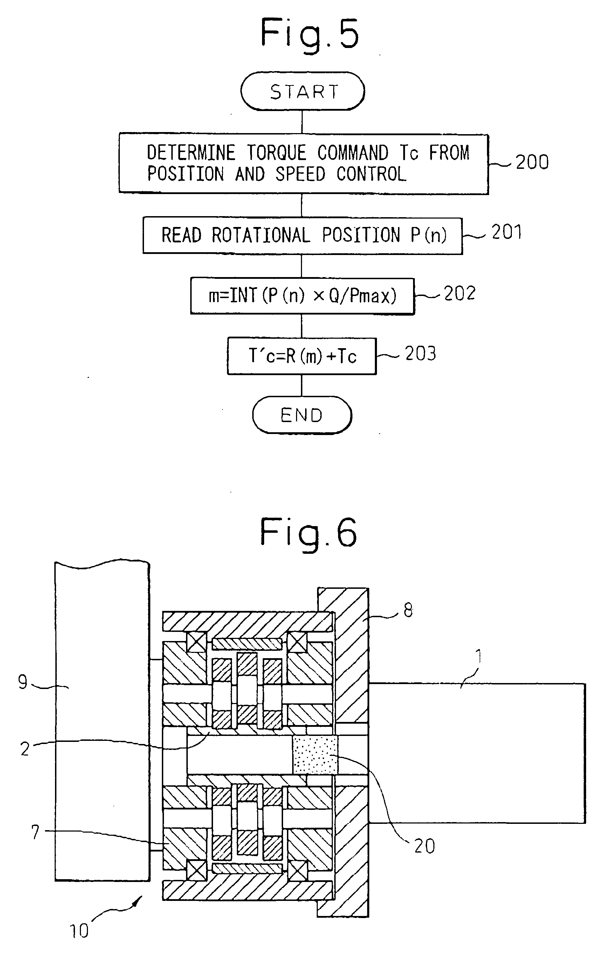

FIG. 5 is a flow chart of processing which the processor of the controller for controlling the servo motor 1 executes every predetermined period when operating the servo motor while correcting the torque command value using the vibration suppression correction torque determined by the learning processing shown in FIG. 4.

It is assumed the learning processing shown in FIG. 4 has already been performed and that the registers R (1) to R(Q) corresponding to the regions store the corresponding vibration suppression correction torques.

First, the processor, as in a conventional manner, performs loop control of the position (proportional control) and speed (proportional and integrated control) to determine the torque command Tc (step 200). Next, the pulse coder 13 is used to read the rotational position P(n) of the motor 1 (step 201). Based on the read position P(n), the calculation of the above equation (2) is performed to find the corresponding divided region m (step 202). The torque command Tc determined at step 200 is added to the value of the register R(m) storing the vibration suppression correction torque corresponding to this divided region m, to obtain the corrected torque command T'c. This corrected torque command T'c is output, and the servo motor 1 is operated in accordance with this output (step 203). Due to this, the servo motor 1 is operated so as to cancel out the vibration component and the occurrence of vibration is suppressed.

In the processing shown in FIGs. 4 and 5, the vibration suppression correction torque is determined in accordance with the rotational position of the motor 1 or the vibration suppression correction torque is corrected to the torque command in accordance with the rotational position of the motor 1, but it is also possible to correct the torque command in accordance with the position of the output shaft 7 of the speed reducer 10 as shown by the broken line in FIG. 3. In this case, at step 101, when the pulses from the pulse coder 13 are cumulatively added and the cumulative value reaches a value corresponding to one rotation of the output side of the speed reducer 10, the cumulative value is cleared to obtain the cumulative value up to one rotation of the output side of the speed reducer (P(n) thereby corresponding to this cumulative value) and this cumulative value is divided by the reduction ratio of the speed reducer to obtain one rotational position of the output side of the speed reducer. Further, at step 104 and step 202, Pmax corresponds to the cumulative value corresponding to one rotation at the output side of the speed reducer and P(n) is the cumulative value. The corresponding region m is found among the divided regions obtained by dividing one rotation of the output side into Q sections, based on the cumulative value P(n), the cumulative value Pmax corresponding to one rotation of the output side of the speed reducer 10, and the divisor Q.

FIG. 6 is a cross-sectional view of a speed reducer 10 used in an articulation system according to a second embodiment of the present invention. This differs from the speed reducer 10 of the first embodiment shown in FIG. 2, in that the drive shaft of the servo motor 1 and the input shaft 2 of the speed reducer 10 is connected by an unbalance coupling 20. The unbalance coupling 20 is attached so as to cancel out the vibration component of the speed reducer 10 by the vibration component due to the unbalance coupling 20. In other respects, it is similar to the speed reducer 10 of the first embodiment. Further, in the control of the servo motor 1 as well, the same processing is performed as in the first embodiment as shown in FIG. 3, FIG. 4, and FIG. 5. Further, instead of connecting by the unbalance coupling 20, it is also possible to directly connect the drive shaft of the servo motor 1 and the input shaft 2 of the speed reducer 10 and attach an unbalance weight to either the drive shaft of the servo motor 1 or the input shaft 2 of the speed reducer 10.

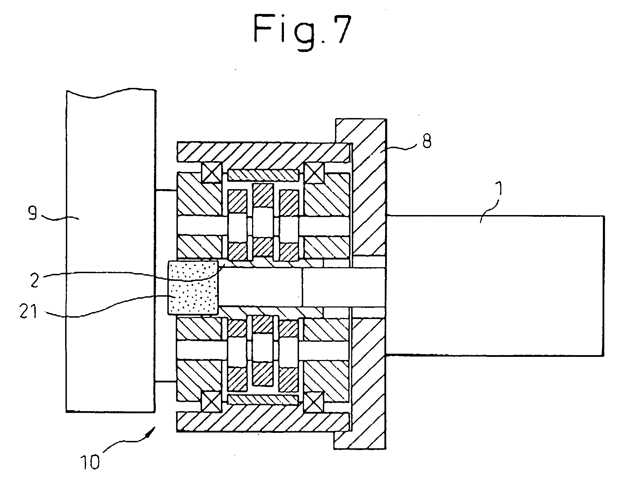

FIG. 7 is a cross-sectional view of a speed reducer 10 used in an articulation system according to a third embodiment of the present invention. This differs from the speed reducer 10 of the first embodiment shown in FIG. 2, in that an unbalance weight 21 is added to the end of the input shaft 2 of the speed reducer 10 at the opposite side to the connecting part with the drive shaft of the servo motor 1. In the same way as the second embodiment, the vibration component due to the unbalance weight 21 is used to cancel out the vibration component of the speed reducer 10. In other respects, this embodiment is similar to the first embodiment. In the control of the servo motor 1 as well, the same processing is performed as in the first embodiment as shown in FIG. 3, FIG. 4, and FIG. 5.

While the present invention has been described with reference to specific embodiments shown in the accompanied drawings, these embodiments are for explanatory use and are not limitative in sense. Therefore, the scope of the present invention is only limited by the claims. The preferred embodiments of the invention can be modified and changed without departing from the scope of the claims.

**Claims**

1. An articulation system for a robot, comprising two members (8, 9) connected with each other through a speed reducer (10) to be able to be rotated relative to each other; a motor (1) for rotationally driving said two members with respect to each other; and a controller for controlling said motor; said speed reducer comprising a case (5), an input shaft (2) connected to a drive shaft of said motor, external gears (3a, 3b, 3c) engaged with said input shaft and able to be eccentrically rocked, an internal gear (4) provided at the inside of said case and meshing with said external gears, an output shaft (7) supported rotatably with respect to said case, and a plurality of pin members (6) engaging with said external gears and transmitting rotating motion of said external gears to said output shaft, said articulation system **characterized in that**:

   said controller comprises a means (14) for obtaining and storing correlation between a vibration component occurring from said speed reducer and motor rotational position, and a means (14) for controlling said motor so as to cancel out the vibration component based on said stored correlation.

2. An articulation system for a robot, comprising two members (8, 9) connected with each other through a speed reducer (10) to be able to be rotated relative to each other; a motor (1) for rotationally driving said two members with respect to each other; and a controller for controlling said motor; said speed reducer comprising a case (5), an input shaft (2) connected to a drive shaft of said motor, external gears (3a, 3b, 3c) engaged with said input shaft and able to be eccentrically rocked, an internal gear (4) provided at the inside of said case and meshing with said external gears, an output shaft (7) supported rotatably with respect to said case, and a plurality of pin members (6) engaging with said external gears and transmitting rotating motion of said external gears to said output shaft, said articulation system **characterized in that**:

   said controller comprises a means (14) for obtaining and storing correlation between a vibration component occurring from said speed reducer and rotational position of said output shaft of said speed reducer, and a means (14) for controlling said motor so as to cancel out the'vibration component based on said stored correlation.

3. The articulation system according to claim 1 or 2, wherein said correlation is obtained by learning processing.

4. The articulation system according to claim 1 or 2, wherein said drive shaft of said motor (1) and said input shaft (2) of said speed reducer (10) are directly connected.

5. The articulation system according to claim 1 or 2, wherein said drive shaft of said motor (1) and said input shaft (2) of said speed reducer (10) are connected through an unbalance coupling (20), so that a vibration component of said unbalance coupling is used to cancel out the vibration component of said speed reducer.

6. The articulation system according to claim 1 or 2, wherein an unbalance weight (21) is added to an end of said input shaft (2) of said speed reducer (10) at an opposite side to said motor (1), so that a vibration component of said unbalance coupling is used to cancel out the vibration component of said speed reducer.

# Fig.1

# Fig.2

# Fig.3

TORQUE COMMAND Tc → + → T'c → MOTOR (1) → SPEED REDUCER (10) → ACCELERATION SENSOR (11)

VIBRATION SUPPRESSION CORRECTION TORQUE GENERATOR (14)

PULSE CODER (13)

BAND PASS FILTER (12)

SPEED REDUCER OUTPUT POSITION CALCULATOR (16)

15

EP 1 533 544 A2

# Fig. 4

```
        ┌──────────┐
        │  START   │
        └────┬─────┘
             │
     100     ▼
      ◇ LEARNING ON ? ◇ ──No──────────────────────┐
             │                                      │
            Yes                                     ▼
  101        ▼                                107 ┌──────────┐
┌─────────────────────────────────┐             │ NORMAL   │
│ READ ROTATIONAL POSITION P(n)   │             │ CONTROL  │
│ READ ACCELERATION SENSOR DATA   │             └──────────┘
│ Acc(n)                          │
└────────────┬────────────────────┘
             │
  102        ▼
┌─────────────────────────────────┐
│ BAND PASS FILTER PROCESSING     │
│ VIBRATION : Vib(n)              │
│ =Acc(n) × (Th×S+1) / (Th×S+1)   │
└────────────┬────────────────────┘
             │
  103        ▼
     ◇ B NUMBER OF MOVING ◇ ──No──┐
     ◇ AVERAGES OF Vib(n)>A ? ◇   │
             │                     ▼
            Yes              ┌──────────┐
  104        ▼              │ LEARNING │
┌──────────────────────┐    │   END    │
│ m=INT(P(n)×Q/Pmax)   │    └──────────┘
└──────────┬───────────┘
  105        ▼
┌──────────────────────┐
│ R(m)=R(m)−K×Vib(n)   │
└──────────┬───────────┘
  106        ▼
┌──────────────────────┐
│ T'c=R(m)+Tc          │
└──────────┬───────────┘
             ▼
        ┌──────────┐
        │   END    │
        └──────────┘
```

10

# Fig.5

START

DETERMINE TORQUE COMMAND Tc FROM POSITION AND SPEED CONTROL — 200

READ ROTATIONAL POSITION P(n) — 201

$m = INT(P(n) \times Q/Pmax)$ — 202

$T'c = R(m) + Tc$ — 203

END

# Fig.6

# Fig.7